# EUROPEAN PATENT APPLICATION

(11) **EP 2 650 531 A2**
(43) Date of publication of application: **16.10.2013**
(21) Application number: 12187962.1
(22) Date of filing: 10.10.2012
(51) Int. Cl.: F03D 7/02, F03D 1/00

(54) **Power generator and power generating system**

(30) Priority: 12.04.2012 JP 2012091185
(71) Applicant: Kabushiki Kaisha Yaskawa Denki, Kitakyushu-Shi Fukuoka 806 (JP)
(72) Inventor: Miyamoto, Yasuhiro, Kitakyushu-shi, Fukuoka 806-0004 (JP)
(74) Representative: Grünecker, Kinkeldey, Stockmair & Schwanhäusser

(57) **Abstract**

A power generator (1, 110) according to an embodiment includes a propeller (13), a position detector (16), and a pitch controller (50). The propeller (13) includes a plurality of blades (13b1, 13b2, 13b3) whose pitch angle is changeable, and is rotated by a fluid. The position detector (16) detects the rotational position of the propeller (13). The pitch controller (50) performs pitch control processing for changing the pitch angle depending on the position of each of the blades (13b1, 13b2, 13b3) specified by the rotational position of the propeller (13).

## Description

### FIELD

The embodiments discussed herein are directed to a power generator and a power generating system.

### BACKGROUND

Conventionally widely known are propeller-type power generators that generate power by rotating a propeller with a fluid, such as a wind and an ocean current. Wind power generators, for example, convert mechanical energy of a propeller rotating by catching the wind into electrical energy with a generator.

In recent years, to eliminate difference in thrust and moment between blades in propeller-type power generators, there has been developed a technology for detecting a load on each blade to control a pitch angle of each blade individually in accordance with the load thus detected. Related technology is disclosed in, for example, Japanese Patent Application Laid-open No. 2003-113769.

However, the technology disclosed in Japanese Patent Application Laid-open No. 2003-113769 fails to change a pitch angle of each blade individually depending on the position of each blade.

In view of the disadvantage described above, it is an object of an aspect of an embodiment to provide a power generator and a power generating system capable of changing a pitch angle of each blade individually depending on the position of each blade.

### SUMMARY

A power generator according to an aspect of an embodiment includes: a propeller, a position detector, and a pitch controller. The propeller includes a plurality of blades whose pitch angle is changeable, and is rotated by a fluid. The position detector detects the rotational position of the propeller. The pitch controller performs pitch control processing for changing the pitch angle depending on the position of each of the blades specified by the rotational position of the propeller.

According to an aspect of an embodiment, it is possible to change a pitch angle of each blade individually depending on the position of each blade.

### BRIEF DESCRIPTION OF DRAWINGS

The present invention can be appreciated more completely and advantages thereof can be readily understood with reference to the description of embodiments below along with the accompanying drawings.

FIG. 1 is a schematic of a configuration of a wind power generator according to a first embodiment.

FIG. 2A is a schematic for explaining a difference between the wind speed near the ground surface and that in the upper air.

FIG. 2B is a schematic of an exemplary operation of pitch control processing according to the first embodiment.

FIG. 3 is a schematic of an example of rotational position and pitch angle conversion information stored in a pitch controller.

FIG. 4 is a schematic of a configuration of a pitch driving unit.

FIG. 5 is a schematic of an exemplary operation of propeller position control processing and pitch control processing performed to remove blades.

FIG. 6 is a schematic of an example of a relationship between a process for removing the blades and pitch angles.

FIG. 7A and FIG. 7B are schematics of another exemplary operation of the pitch control processing in the propeller position control processing.

FIG. 8 is a block diagram of the configuration of the wind power generator according to the first embodiment.

FIG. 9 is a block diagram of an exemplary configuration of a power converting unit.

FIG. 10 is a block diagram of a configuration of a torque command generating unit.

FIG. 11 is a schematic of a configuration of a wind farm according to a second embodiment.

### DESCRIPTION OF EMBODIMENTS

Exemplary embodiments of a power generator and a power generating system disclosed in the present application are described below in greater detail with reference to the accompanying drawings. It is to be noted that the embodiments below are not intended to limit the present invention.

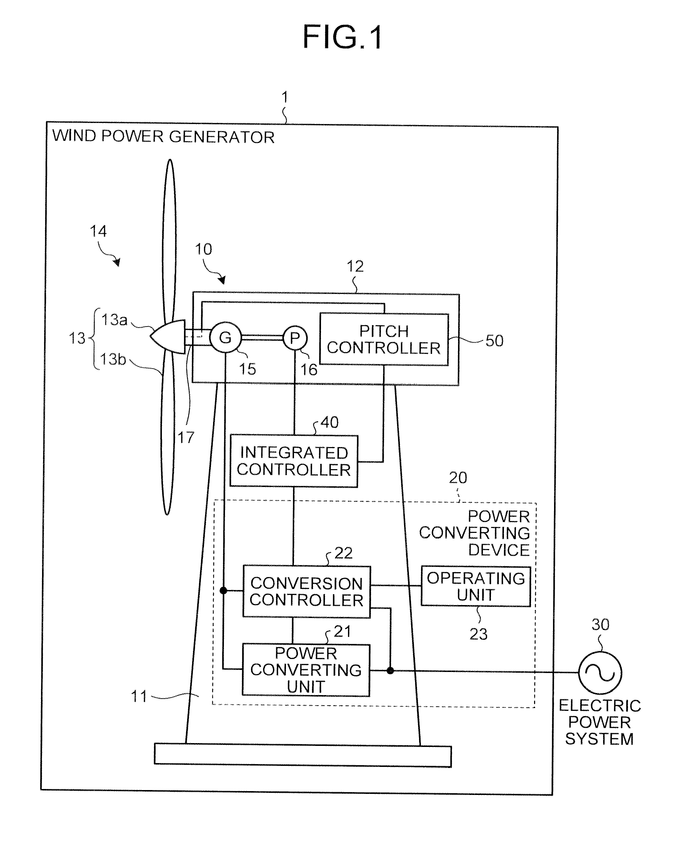

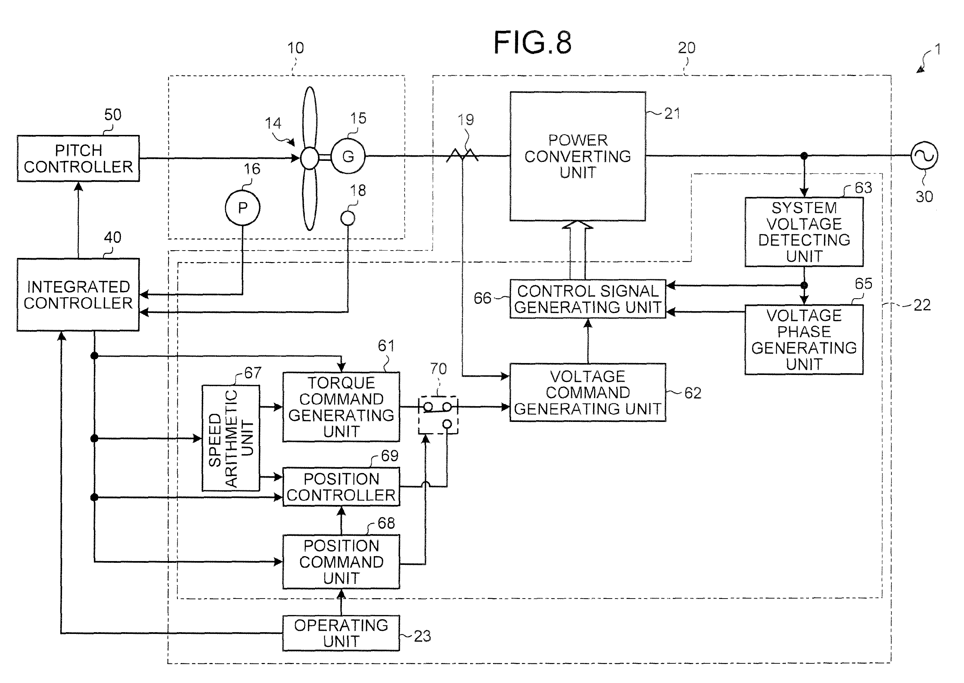

FIG. 1 is a schematic of a configuration of a wind power generator according to a first embodiment. As illustrated in FIG. 1, a wind power generator 1 according to the first embodiment includes a wind power generating unit 10 and a power converting device 20, and supplies electric power to an electric power system 30. For convenience of explanation, a part of the configuration is not illustrated in FIG. 1. The configuration not illustrated will be described with reference to FIG. 8 and other drawings.

The wind power generating unit 10 includes a windmill 14 having a tower body 11, a nacelle 12, and a propeller 13. The nacelle 12 is rotatably supported by the tower body 11. The propeller 13 includes a hub 13a and a plurality of blades 13b attached to different positions on the hub 13a. The pitch angle of the blades 13b can be changed.

The pitch angle herein means an angle between the plane of rotation of the propeller 13 and the chord of the blade 13b. As the pitch angle is made smaller, an area to catch the wind increases on the blade 13b, that is, drag caused by the wind increases on the blade 13b. As a result, it is possible to extract more energy from the wind.

Hereinafter, a pitch angle at which energy can be extracted from the wind most efficiently (e.g., 0 degree) is referred to as a "fine angle", whereas a pitch angle at which energy extracted from the wind is the least (e.g., 90 degrees) is referred to as a "feathering angle".

In the first embodiment, an explanation will be made of an example in which three blades 13b are attached to the hub 13a at equal intervals (that is, at intervals of 120 degrees). However, the number of blades 13b attached to the hub 13a is not limited to three.

The nacelle 12 houses a generator 15 connected to the propeller 13 via a shaft 17 (main shaft). The generator 15 is a rotating electrical machine that can also be used as an electric motor, and is a permanent magnet rotating electrical machine, for example. The shaft 17 is connected to the hub 13a of the propeller 13.

Furthermore, the nacelle 12 houses a position detector 16 that detects the rotational position of the propeller 13 rotated by wind power. The position detector 16 is an absolute value encoder, for example, and detects the rotational position of the propeller 13 by detecting the rotational position of the shaft 17. The rotational position of the propeller 13 detected by the position detector 16 is output to an integrated controller 40, which will be described later.

The power converting device 20 includes a power converting unit 21, a conversion controller 22, and an operating unit 23. The power converting device 20 is arranged in the tower body 11.

The power converting unit 21 performs power conversion between the generator 15 of the wind power generating unit 10 and the electric power system 30 bi-directionally. A matrix converter can be used as the power converting unit 21, for example. An exemplary configuration of the power converting unit 21 will be described later with reference to FIG. 8.

The conversion controller 22 outputs a control signal to the power converting unit 21, and performs power generation control processing for causing the power converting unit 21 to perform power conversion from the generator 15 to the electric power system 30. As a result, electric power generated by the generator 15 is converted from direct current (DC) to DC by the power converting unit 21, and is supplied to the electric power system 30.

Furthermore, the conversion controller 22 outputs a control signal to the power converting unit 21, and causes the power converting unit 21 to perform power conversion from the electric power system 30 to the generator 15. Thus, the conversion controller 22 performs propeller position control processing for controlling the rotational position of the propeller 13 by using the generator 15 as an electric motor. The propeller position control processing is performed based on an operation input to the operating unit 23 in a replacement operation of the blade 13b, for example, which will be described later.

As described above, the conversion controller 22 outputs a control signal to the power converting unit 21, and causes the power converting unit 21 to perform power conversion between the generator 15 and the electric power system 30 bi-directionally. Thus, the conversion controller 22 performs the power generation control processing and the propeller position control processing.

The wind power generator 1 further includes the integrated controller 40 and a pitch controller 50, and performs pitch control processing for changing the pitch angle of the blade 13b to a pitch angle corresponding to the position of the blade 13b based on the rotational position of the propeller 13 output from the position detector 16. The integrated controller 40 is arranged in the tower body 11, and the pitch controller 50 is arranged in the nacelle 12, for example.

The integrated controller 40 acquires the rotational position of the propeller 13 from the position detector 16, and outputs the rotational position thus acquired to the pitch controller 50. Thus, the rotational position of the propeller 13 detected by the position detector 16 is input to the pitch controller 50 via the integrated controller 40.

When receiving the rotational position of the propeller 13 detected by the position detector 16 via the integrated controller 40, the pitch controller 50 generates a pitch angle change command corresponding to the rotational position of the propeller 13 for each blade 13b, and changes the pitch angle of the blade 13b in accordance with the pitch angle change command thus generated for each blade 13b.

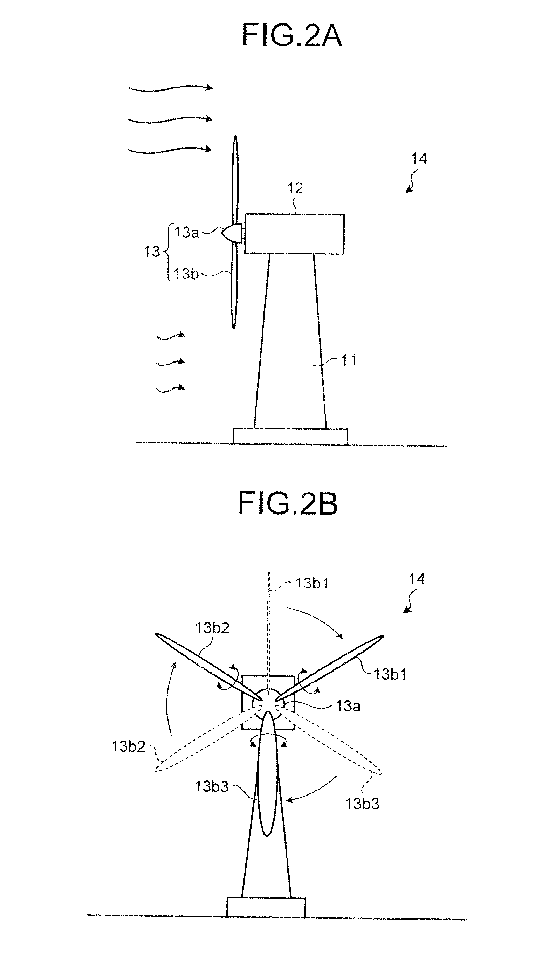

The contents of the pitch control processing performed in the power generation control processing will now be described with reference to FIG. 2A and FIG. 2B. FIG. 2A is a schematic for explaining a difference between the wind speed near the ground surface and that in the upper air. FIG. 2B is a schematic of an exemplary operation of the pitch control processing according to the first embodiment.

The pitch control processing explained with reference to FIG. 2A and FIG. 2B is performed when the conversion controller 22 performs the power generation control processing, that is, when the conversion controller 22 causes the power converting unit 21 to perform power conversion from the generator 15 to the electric power system 30.

As illustrated in FIG. 2A, the wind speed near the ground surface tends to be lower than that in the upper air because of an influence of friction on the ground surface, for example. As a result, the drag caused by the wind on the blade 13b located at a lower position with respect to the ground surface tends to be lower than that on the blade 13b located at a higher position with respect to the ground surface.

Therefore, if the pitch angle of the blade 13b located at a higher position with respect to the ground surface is identical to that of the blade 13b located at a lower position with respect to the ground surface, a bias may possibly occur in thrust and a load between these blades 13b. In the conventional technology, because the pitch angle of each blade fails to be changed individually depending on the position of each blade, the bias in the thrust and the load described above may possibly occur.

To address this, the pitch controller 50 performs the pitch control processing, thereby causing the blade 13b located at a lower position to have a larger area to catch the wind. This makes it possible to reduce the bias in the thrust and the load between the blades 13b.

As indicated by a dotted line in FIG. 2B, for example, an assumption is made that a tip of a blade 13b1 is located at the highest position with respect to the ground surface. In this case, the pitch controller 50 changes the pitch angle of the blade 13b1 to the feathering angle, that is, an angle most unlikely to catch the wind, for example. Furthermore, the pitch controller 50 changes the pitch angles of a blade 13b2 and a blade 13b3 located at lower positions than that of the blade 13b1 to an angle larger than the feathering angle, that is, an angle more likely to catch the wind than that for the blade 13b1.

If the propeller 13 catches the wind to rotate, and the positions of the blades 13b1, 13b2, and 13b3 are changed along with the rotation, the pitch controller 50 changes the pitch angles of the blades 13b1, 13b2, and 13b3 depending on the change.

An assumption is made that the positions of the blades 13b1, 13b2, and 13b3 are changed from the positions indicated by the dotted lines to the positions indicated by solid lines in FIG. 2B and that a tip of the blade 13b3 is located at the closest position to the ground surface, for example. In this case, the blade 13b3 comes closer to the ground surface than the position indicated by the dotted line in FIG. 2B. Therefore, the pitch controller 50 changes the pitch angle of the blade 13b3 to a pitch angle (e.g., the fine angle) smaller than the pitch angle thereof at the position indicated by the dotted line in FIG. 2B.

The blade 13b1 also comes closer to the ground surface than the position indicated by the dotted line in FIG. 2B. Therefore, the pitch controller 50 changes the pitch angle of the blade 13b1 to a pitch angle smaller than the pitch angle thereof at the position indicated by the dotted line in FIG. 2B. By contrast, the blade 13b2 moves away from the ground surface compared with the position indicated by the dotted line in FIG. 2B. Therefore, the pitch controller 50 changes the pitch angle of the blade 13b2 to a pitch angle larger than the pitch angle thereof at the position indicated by the dotted line in FIG. 2B.

As described above, the pitch controller 50 according to the first embodiment changes the pitch angle for each blade 13b such that the blade 13b located at a lower position has a smaller pitch angle, that is, the blade 13b located at a position closer to the ground surface has a larger area to catch the wind. Therefore, it is possible to suppress occurrence of the bias in the thrust and the load between the blades 13b.

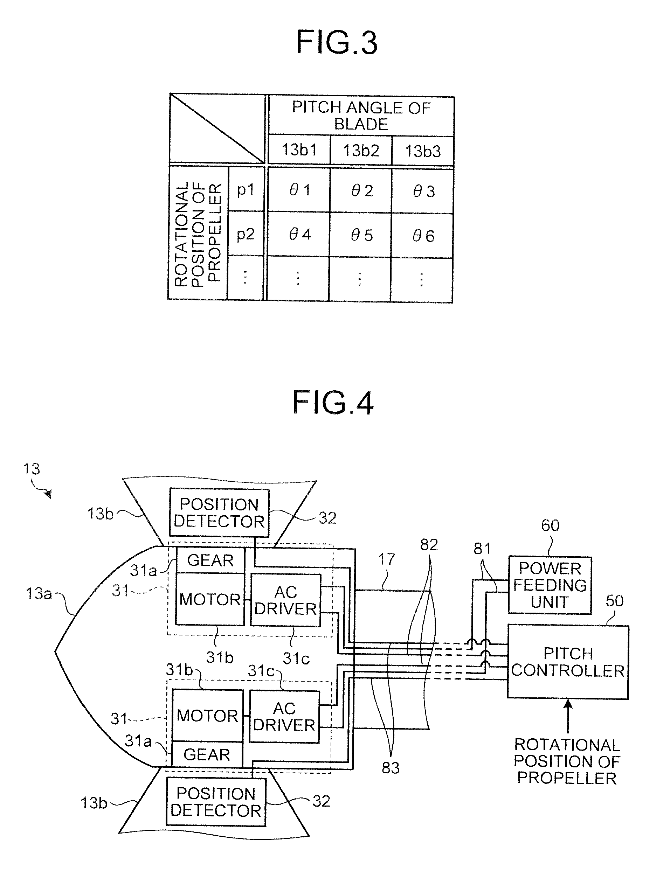

The pitch control processing will now be described more specifically. The pitch controller 50 acquires the rotational position of the propeller 13 from the position detector 16 via the integrated controller 40, and generates a pitch angle change command corresponding to the rotational position thus acquired. The generation processing of the pitch angle change command performed by the pitch controller 50 will now be described with reference to FIG. 3. FIG. 3 is a schematic of an example of rotational position and pitch angle conversion information stored in the pitch controller 50.

The pitch controller 50 includes a storage unit, which is not illustrated. The storage unit stores therein the rotational position and pitch angle conversion information illustrated in FIG. 3. The rotational position and pitch angle conversion information illustrated in FIG. 3 is information in which the rotational position of the propeller 13 is associated with the pitch angles of the blades 13b1, 13b2, and 13b3.

When acquiring the rotational position of the propeller 13, the pitch controller 50 determines the pitch angles of the blades 13b1, 13b2, and 13b3 corresponding to the rotational position of the propeller 13 by using the rotational position and pitch angle conversion information illustrated in FIG. 3, and generates each pitch angle change command in accordance with the pitch angle thus determined.

If the rotational position acquired from the position detector 16 is "p1" as illustrated in FIG. 3, for example, the pitch controller 50 determines the pitch angles of the blades 13b1, 13b2, and 13b3 to be "θ1", "θ2", and "θ3", respectively. The pitch controller 50 then generates pitch angle change commands for changing the pitch angles of the blades 13b1, 13b2, and 13b3 to "θ1", "θ2", and "θ3" for the blades 13b1, 13b2, and 13b3, respectively.

The pitch controller 50 then changes the pitch angle of each blade 13b in accordance with the pitch angle change command thus generated. Specifically, a pitch driving unit is provided to each blade 13b, and the pitch controller 50 controls the pitch driving unit in accordance with the pitch angle change command, thereby changing the pitch angle of each blade 13b.

FIG. 4 is a schematic of a configuration of the pitch driving unit. As illustrated in FIG. 4, a pitch driving unit 31 is provided to each blade 13b. The pitch driving unit 31 is arranged in the hub 13a. While two blades 13b alone among the three blades 13b are illustrated in FIG. 4, the other blade 13b is also provided with a similar pitch driving unit 31.

The pitch driving unit 31 includes a gear 31a, a motor 31b, and an alternate current (AC) driver 31c. The pitch driving unit 31 uses the AC driver 31c to drive the motor 31b, and causes the gear 31a to rotate along with the rotation of the motor 31b, thereby rotating the blade 13b connected to the gear 31a. Thus, the pitch angle of the blade 13b is changed.

Each blade 13b is provided with a position detector 32. The position detector 32 is an absolute value encoder, for example, and is arranged in the blade 13b. The position detector 32 detects the pitch angle of the blade 13b, and outputs the pitch angle to the pitch controller 50.

The pitch controller 50 uses the present pitch angle acquired from the position detector 32 and the pitch angle change command to calculate difference between a target pitch angle and the present pitch angle. The pitch controller 50 then controls the AC driver 31c of the pitch driving unit 31 such that the difference thus calculated decreases. Thus, the pitch controller 50 can change the pitch angle of each blade 13b to a desired pitch angle corresponding to the position of each blade 13b.

The pitch controller 50 is connected to the AC driver 31c of each pitch driving unit 31 via a signal line 82, and is connected to each position detector 32 via a signal line 83. The pitch controller 50 acquires the present pitch angle of each blade 13b from each position detector 32 via the signal line 83, and transmits a control signal to each AC driver 31c via the signal line 82. Each AC driver 31c is connected to a power feeding unit 60 via a feed cable 81, and electric power is supplied from the power feeding unit 60 via the feed cable 81.

The rotational position of the propeller 13 detected by the position detector 16 is used for the propeller position control processing performed by the conversion controller 22 besides for the pitch control processing. Furthermore, if the conversion controller 22 performs the propeller position control processing, the pitch controller 50 performs pitch control processing corresponding to the propeller position control processing. In the description below, the pitch control processing in the propeller position control processing will be described after an explanation of the propeller position control processing.

The propeller position control processing will now be described. The conversion controller 22 outputs a control signal to the power converting unit 21 based on an operation input to the operating unit 23, and causes the power converting unit 21 to perform the propeller position control processing or the power generation control processing. The propeller position control processing is processing for converting electric power output from the electric power system 30 to supply the electric power to the generator 15 and causing the generator 15 to operate as an electric motor. The power generation control processing is processing for converting electric power output from the generator 15 into electric power corresponding to the electric power system 30 and outputting the electric power to the electric power system 30.

If the propeller position control processing is selected by an operation input to the operating unit 23, the conversion controller 22 performs the propeller position control processing.

The propeller position control processing is performed to attach the blade 13b to the hub 13a, to remove the blade 13b from the hub 13a, and to carry out an inspection and maintenance of the blade 13b, for example. By performing the propeller position control processing, the conversion controller 22 causes the position of the blade 13b to coincide with a target position (corresponding to an attachment position or a removal position) specified by an operation input to the operating unit 23, for example.

The information of the target position is set in advance in the conversion controller 22 for each blade 13b as a position at which attachment and removal of the blade 13b is facilitated, and is selected by an operation input to the operating unit 23. Alternatively, by using positional information input by an operation on the operating unit 23 as the target position, an arbitrary target position may be set.

Based on the rotational position of the propeller 13 detected by the position detector 16 and the target position specified by the operation input to the operating unit 23, the conversion controller 22 generates a control signal for causing the rotational position of the propeller 13 to coincide with the target position. The conversion controller 22 then outputs the control signal thus generated to the power converting unit 21.

The conversion controller 22 acquires the rotational position of the propeller 13 detected by the position detector 16 via the integrated controller 40 (refer to FIG. 1). In other words, the integrated controller 40 acquires the rotational position of the propeller 13 from the position detector 16, and outputs the rotational position thus acquired to the pitch controller 50 and the conversion controller 22.

As described above, the wind power generator 1 according to the first embodiment inputs the rotational position of the propeller 13 detected by the position detector 16 to the integrated controller 40, and distributes the rotational position of the propeller 13 from the integrated controller 40 to the conversion controller 22 and the pitch controller 50. Therefore, the rotational position of the propeller 13 detected by the position detector 16 can be used for the propeller position control processing and the power generation control processing, which will be described later, besides for the pitch control processing.

The wind power generator 1 may be configured to input the rotational position of the propeller 13 detected by the position detector 16 not via the integrated controller 40 but directly to the conversion controller 22 and the pitch controller 50.

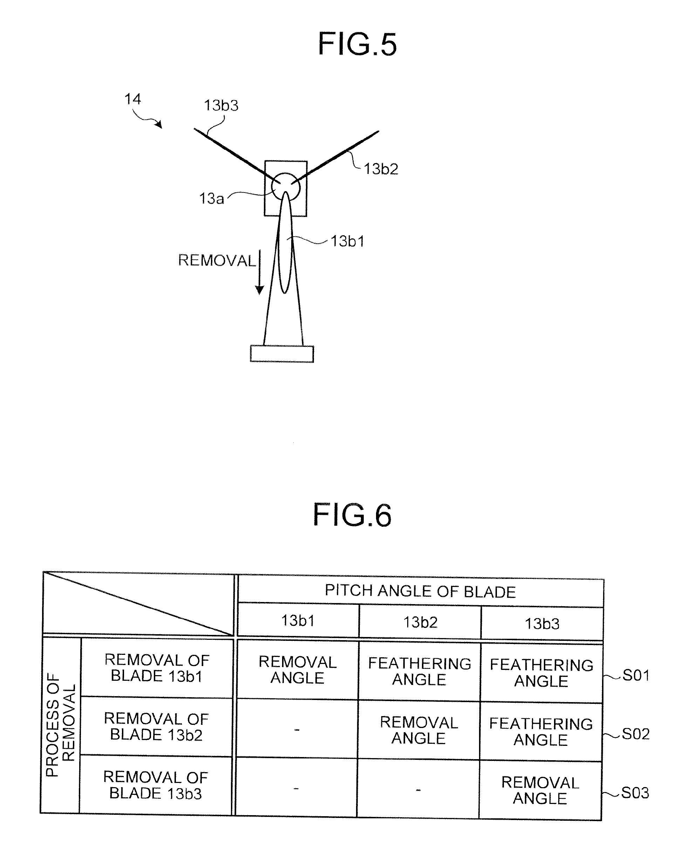

The pitch control processing performed by the pitch controller 50 in the propeller position control processing will now be described. As an example, the propeller position control processing and the pitch control processing performed to remove the blade 13b will be explained with reference to FIG. 5 and FIG. 6. FIG. 5 is a schematic of an exemplary operation of the propeller position control processing and the pitch control processing performed to remove the blades 13b. FIG. 6 is a schematic of an example of a relationship between a process for removing the blades 13b and the pitch angles.

An assumption is made that the blades 13b1, 13b2, and 13b3 are removed in order of the blades 13b1, 13b2, and 13b3.

An operator operates the operating unit 23 to set the propeller position control processing, and selects the blade 13b1 as a blade to be removed from the hub 13a. With this operation, the conversion controller 22 specifies a target position at which removal of the blade 13b1 is to be performed, that is, a position at which removal of the blade 13b1 is facilitated. The target position is, for example, a position at which the tip of the blade 13b1 is directed vertically downward, that is, a position at which the tip of the blade 13b1 comes closest to the ground surface.

The conversion controller 22 acquires the rotational position of the propeller 13 from the integrated controller 40, and detects difference between the rotational position thus acquired and the target position specified by the operating unit 23. Based on the difference between the rotational position of the propeller 13 and the target position, the conversion controller 22 generates a control signal for causing the rotational position of the propeller 13 to coincide with the target position, and inputs the control signal to the power converting unit 21. As a result, the rotational position of the propeller 13 shifts to the target position, and the windmill 14 stops at the target position, that is, a position at which removal of the blade 13b1 is facilitated as illustrated in FIG. 5.

If the blade 13b1 is selected as a blade to be removed from the hub 13a, operation information on the removal is input to the pitch controller 50 via the integrated controller 40. When receiving the operation information, the pitch controller 50 drives the pitch driving unit 31 (refer to FIG. 4) corresponding to the blade 13b1, thereby changing the pitch angle of the blade 13b1 to a pitch angle at which removal of the blade 13b1 is facilitated (hereinafter, referred to as a "removal angle").

As described above, in the first embodiment, it is possible to stop the blade 13b to be removed automatically at the target position by the propeller position control processing, and to change the pitch angle of the blade 13b to be removed automatically to a pitch angle at which removal thereof is facilitated by the pitch control processing. Therefore, the wind power generator 1 according to the first embodiment facilitates a removal operation of the blade 13b.

Furthermore, at illustrated in FIG. 5, the pitch controller 50 changes the pitch angles of the blade 13b2 and the blade 13b3 not to be removed to the "feathering angle", that is, a pitch angle at which the drag caused by the wind on the blade 13b2 and the blade 13b3 is the lowest.

As a result, even if a gust of wind blows during the removal operation of the blade 13b1 the blades 13b2 and 13b3 let the wind through, whereby misalignment of the blade 13b1 is unlikely to occur. Therefore, the blade 13b1 to be removed can be kept stopped more stably.

As described above, to remove the blade 13b1 from the hub 13a, the pitch controller 50 changes the pitch angle of the blade 13b1 to the "removal angle", and changes the pitch angles of the blades 13b2 and 13b3 to the "feathering angle" (refer to Step S01 in FIG. 6).

In other words, to remove one of the blades 13b from the hub 13a in the state where all the three blades 13b are attached, the pitch controller 50 changes the pitch angle of the blade 13b to be removed to the "removal angle", and changes the pitch angles of the other blades 13b to the "feathering angle". The pitch angles of the blades 13b not to be removed are not necessarily the "feathering angle".

The pitch control processing in the propeller position control processing may be performed after the blade 13b to be removed reaches the target position, or may be performed such that the change of the pitch angle of each blade 13b is completed at the operational timing when the blade 13b to be removed reaches the target position.

Subsequently, the operator operates the operating unit 23 to select the blade 13b2 as a blade to be removed from the hub 13a. With this operation, the conversion controller 22 specifies a target position at which removal of the blade 13b2 is to be performed. The conversion controller 22 then generates a control signal for causing the rotational position of the propeller 13 to coincide with the new target position, and inputs the control signal to the power converting unit 21. As a result, the rotational position of the propeller 13 shifts to the target position, and the blade 13b2 stops at the target position.

In this process, the pitch controller 50 changes the pitch angle of the blade 13b2 to be removed to the removal angle while keeping the pitch angle of the blade 13b3 not to be removed at the feathering angle (refer to Step S02 in FIG. 6).

Furthermore, the operator operates the operating unit 23 to select the blade 13b3 as a blade to be removed from the hub 13a. Thus, the conversion controller 22 performs the same processing as described above, whereby the blade 13b3 stops at a target position. Subsequently, the pitch controller 50 changes the pitch angle of the blade 13b3 to be removed to the removal angle (refer to Step S03 in FIG. 6), thereby facilitating the operator's removing the blade 13b3.

In the description above, the explanation has been made of the process for removing the blades 13b from the hub 13a. However, to attach the blades 13b to the hub 13a, the conversion controller 22 also can cause the rotational position of the propeller 13 to coincide with the target position. This enables the shaft 17 to stop at the target position, thereby facilitating the attachment of the blades 13b similarly to the removal thereof.

To attach the blades 13b to the hub 13a, the pitch controller 50 changes the pitch angle of the blade 13b to be attached to a predetermined attachment angle, and the pitch angle of the blade 13b that has already been attached to the feathering angle. This makes it possible to perform the attachment of the blades 13b in a simple and stable manner similarly to the removal thereof.

As described above, in the first embodiment, the conversion controller 22 (corresponding to an example of a position controller) performs the position control processing for controlling the rotational position of the propeller 13 to locate one of the blades 13b at a predetermined attachment position or a predetermined removal position. If the conversion controller 22 performs the propeller position control processing, the pitch controller 50 changes the pitch angle of the blade 13b to be attached or to be removed to a pitch angle corresponding to the attachment position or the removal position. Therefore, it is possible to facilitate the attachment and the removal of the blades 13b.

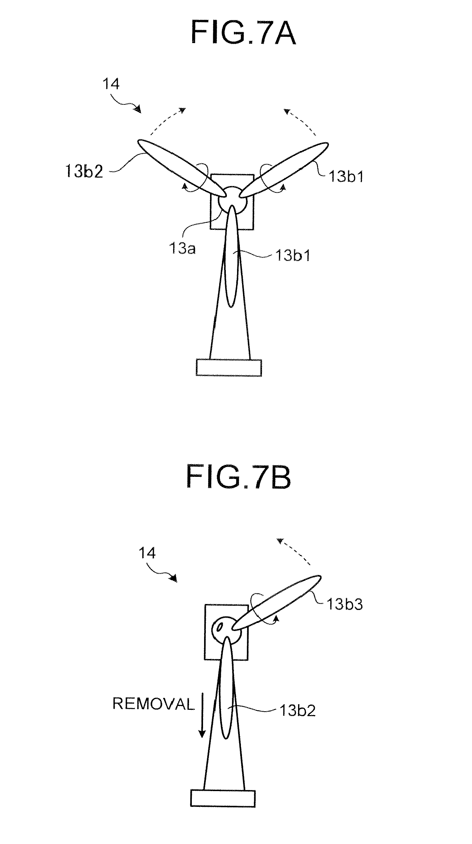

The pitch control processing in the propeller position control processing is not limited to the processing contents described above. An explanation will be made of another exemplary operation of the pitch control processing in the propeller position control processing. FIG. 7A and FIG. 7B are schematics of another exemplary operation of the pitch control processing in the propeller position control processing.

In the description above, to remove the blade 13b1 from the hub 13a, the pitch angles of the blades 13b2 and 13b3 not to be removed are changed to the feathering angle, whereby the rotational position of the propeller 13 is stabilized. The pitch angles of the blades 13b2 and 13b3, however, may be an angle other than the feathering angle.

As illustrated in FIG. 7A, for example, the pitch controller 50 may change the pitch angle of the blade 13b2 to the fine angle, and may change the pitch angle of the blade 13b3 to an inverse fine angle inverted 180 degrees from the fine angle.

As illustrated in FIG. 7A, the blade 13b2 whose pitch angle is changed to the fine angle attempts to rotate in the same direction as the rotation direction of the propeller 13 by catching the wind. By contrast, the blade 13b3 whose pitch angle is changed to the inverse fine angle attempts to rotate in the opposite direction to the rotation direction of the propeller 13 by catching the wind. As a result, the force of the blade 13b2 rotating the propeller 13 and the force of the blade 13b3 rotating the propeller 13 are balanced, whereby the shaft 17 can be kept stopped stably.

In FIG. 7A, the pitch angle of the blade 13b2 is the fine angle, and the pitch angle of the blade 13b3 is the inverse fine angle. Alternatively, the pitch angle of the blade 13b2 may be the inverse fine angle, and the pitch angle of the blade 13b3 may be the fine angle.

In the description above, to remove the blade 13b2 from the hub 13a, the pitch angle of the blade 13b3 is changed to the feathering angle (refer to Step S02 in FIG. 6). The pitch controller 50, however, may change the pitch angle of the blade 13b3 to the inverse fine angle as illustrated in FIG. 7B.

In the state where all the three blades 13b are attached (refer to FIG. 5, for example), the balance between the right and the left is maintained by the weights of the two blades 13b not to be removed (blades 13b2 and 13b3 in FIG. 5). In the state where one of the three blades 13b has already been removed as illustrated in FIG. 7B, however, the balance described above is lost, and greater force is required to keep the rotational position of the propeller 13.

To address this, the pitch controller 50 may change the pitch angle of the blade 13b3 not to be removed to the inverse fine angle. As a result, the blade 13b3 attempts to rotate by caching the wind in the opposite direction to a direction in which the blade 13b3 rotates the shaft 17 by its own weight. In other words, by absorbing the force of the blade 13b3 rotating the shaft 17 by its own weight with the force of the blade 13b3 rotating the shaft 17 by wind power, the shaft 17 can be kept stopped stably.

Contrary to the state illustrated in FIG. 7B, if the blade 13b3 has already been removed and the blade 13b1 is attached to the hub 13a, the pitch angle of the blade 13b1 may be the fine angle. As described above, if one blade 13b not to be removed is left, the pitch angle of the blade 13b may be changed such that the direction in which the blade 13b rotates the shaft 17 by wind power is opposite to the direction in which the blade 13b rotates the shaft 17 by its own weight.

Switching of modes from the mode for performing the pitch control processing in the power generation control processing to the mode for performing the pitch control processing in the propeller position control processing is performed based on an operation input to the operating unit 23 by the operator.

In other words, if the operator operates the operating unit 23 to set the propeller position control processing, the information indicating that the propeller position control processing is set is output to the integrated controller 40. When receiving the information, the integrated controller 40 outputs a mode switching command to the pitch controller 50. As a result, the pitch controller 50 switches the processing modes from the mode for performing the pitch control processing in the power generation control processing to the mode for performing the pitch control processing in the propeller position control processing.

Whether each blade 13b is attached to the hub 13a can be determined based on an output from a blade detection sensor that is arranged in the hub 13a and that detects the presence of each blade 13b, for example.

The configuration of the wind power generator 1 according to the first embodiment will now be described more specifically with reference to the drawings. FIG. 8 is a block diagram of the configuration of the wind power generator 1 according to the first embodiment.

As illustrated in FIG. 8, the wind power generator 1 includes the wind power generating unit 10, the power converting device 20, the integrated controller 40, and the pitch controller 50. The wind power generating unit 10 further includes a wind detector 18 in addition to the windmill 14, the generator 15, and the position detector 16. The wind detector 18 detects the wind speed around the windmill 14, and outputs the wind speed thus detected to the integrated controller 40 as a wind speed detection value.

The power converting device 20 includes a generator current detector 19, the power converting unit 21, the conversion controller 22, and the operating unit 23. The conversion controller 22 is operated by electric power generated by the generator 15 of the wind power generating unit 10. If no electric power can be provided from the generator 15, the conversion controller 22 may be operated by electric power supplied from an uninterruptible power supply (UPS), which is not illustrated.

The generator current detector 19 detects an electric current flowing between the power converting unit 21 and the generator 15, and outputs an instantaneous value of the electric current thus detected to the conversion controller 22 as a generator current detection value. A current sensor that detects an electric current by using a hall element serving as a magneto-electric converting element can be used as the generator current detector 19, for example.

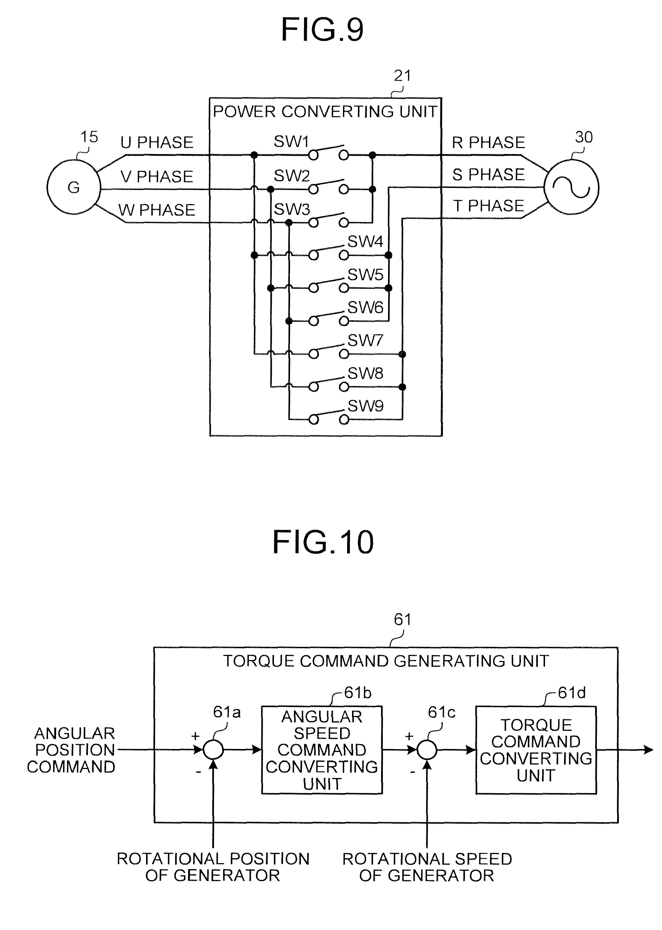

The power converting unit 21 performs power conversion between the generator 15 and the electric power system 30 bi-directionally. An exemplary configuration of the power converting unit 21 will now be described with reference to FIG. 9. FIG. 9 is a block diagram of an exemplary configuration of the power converting unit 21.

As illustrated in FIG. 9, the power converting unit 21 includes a plurality of bidirectional switches SW1 to SW9 that connect each phase (U phase, V phase, and W phase) of the generator 15 and each phase (R phase, S phase, and T phase) of the electric power system 30. While the generator current detector 19 is arranged between each phase of the generator 15 and the power converting unit 21, the generator current detector 19 is not illustrated in FIG. 9 for convenience of explanation.

The bidirectional switches SW1 to SW9 are formed of two elements obtained by connecting unidirectional switching elements in parallel in direction opposite to each other, for example. A semiconductor switch, such as an insulated gate bipolar transistor (IGBT), is used as the switching element, for example. By inputting a signal to the gate of the semiconductor switch to turn ON/OFF the semiconductor switch, the conducing direction is controlled.

The bidirectional switches SW1 to SW3 are bidirectional switches that connect the U phase, the V phase, and the W phase of the generator 15 to the R phase of the electric power system 30. The bidirectional switches SW4 to SW6 are bidirectional switches that connect the U phase, the V phase, and the W phase of the generator 15 to the S phase of the electric power system 30. The bidirectional switches SW7 to SW9 are bidirectional switches that connect the U phase, the V phase, and the W phase of the generator 15 to the T phase of the electric power system 30. With pulse width modulation (PWM) control performed on the bidirectional switches SW1 to SW9 by a control signal generating unit 66, which will be described later, electric power is converted between the generator 15 and the electric power system 30.

The configuration of the power converting unit 21 is not limited to the configuration illustrated in FIG. 9. The power converting unit 21 may be a series-connected multilevel matrix converter in which single-phase matrix converters are series-connected for each phase, for example. The explanation has been made of the case where the power converting unit 21 is a matrix converter that performs bidirectional power conversion alone, for example. Alternatively, the power converting unit 21 may include a matrix converter that performs power conversion from the generator 15 to the electric power system 30 and a matrix converter that performs power conversion from the electric power system 30 to the generator 15.

Furthermore, the explanation has been made of the case where the power converting unit 21 is a matrix converter, for example. However, the power converting unit 21 is not limited to a power converting unit that performs AC-AC direct conversion, such as a matrix converter, and may be a power converting unit that performs AC-DC-AC conversion.

Referring back to FIG. 8, the configuration of the conversion controller 22 will now be described. The conversion controller 22 includes a torque command generating unit 61, a voltage command generating unit 62, a system voltage detecting unit 63, a voltage phase generating unit 65, the control signal generating unit 66, and a speed arithmetic unit 67.

The speed arithmetic unit 67 acquires the rotational position of the propeller 13 from the position detector 16 via the integrated controller 40, and calculate the rotational speed of the generator 15 from the rotational position of the propeller 13 thus acquired.

If the shaft 17 is connected to the generator 15 with no speed-increasing gear that increases rotation of the shaft 17 and outputs the rotation to the generator 15 interposed therebetween, the rotational speed of the power generation 15 is identical to the rotational speed of the shaft 17. Therefore, by calculating the rotational speed of the shaft 17 from the information of the rotational position of the propeller 13, the speed arithmetic unit 67 can derive the rotational speed of the generator 15.

By contrast, if the shaft 17 is connected to the generator 15 with a speed-increasing gear interposed therebetween, the speed arithmetic unit 67 calculates the rotational speed of the shaft 17 from the information of the rotational position of the propeller 13, and multipliers the arithmetic result by a coefficient in proportion to a speed increasing ratio of the speed-increasing gear. Thus, the speed arithmetic unit 67 can derive the rotational speed of the generator 15.

As described above, in the wind power generator 1 according to the first embodiment, the speed arithmetic unit 67 uses the rotational position of the propeller 13 detected by the position detector 16 to calculate the rotational speed of the generator 15. Therefore, according to the wind power generator 1 according to the first embodiment, the rotational speed of the generator 15 can be derived without providing a speed detector that detects the rotational speed of the generator 15 separately.

In the wind power generator 1 according to the first embodiment, the speed arithmetic unit 67 calculates the rotational speed of the generator 15. Alternatively, the integrated controller 40 may calculate the rotational speed of the generator 15.

The rotational speed of the generator 15 is input to the torque command generating unit 61 and a position controller 69. The torque command generating unit 61 generates a torque command for determining the rotating torque of the generator 15, and outputs the torque command. The configuration of the torque command generating unit 61 will now be described with reference to FIG. 10. FIG. 10 is a block diagram of the configuration of the torque command generating unit 61.

As illustrated in FIG. 10, the torque command generating unit 61 includes a first subtraction unit 61a, an angular speed command converting unit 61b, a second subtraction unit 61c, and a torque command converting unit 61d.

The first subtraction unit 61a receives an angular position command transmitted from outside and the rotational position of the generator 15 transmitted from the integrated controller 40. The rotational position of the generator 15 is calculated by the integrated controller 40 based on the rotational position of the propeller 13. The first subtraction unit 61a subtracts the rotational position of the generator 15 from the angular position command, and outputs the angular position command to the angular speed command converting unit 61b.

In other words, the first subtraction unit 61a compares a target angular position specified by the angular position command with the present rotational position of the generator 15, and outputs difference between the target angular position and the present rotational position of the generator 15 to the angular speed command converting unit 61b as a position differential signal.

The angular speed command converting unit 61b differentiates the position differential signal acquired from the first subtraction unit 61a to generate an angular speed command, and outputs the angular speed command thus generated to the second subtraction unit 61c.

The second subtraction unit 61c receives the angular speed command transmitted from the angular speed command converting unit 61b and the rotational speed of the generator 15 transmitted from the speed arithmetic unit 67. The second subtraction unit 61c subtracts the rotational speed from the angular speed command, and outputs the angular speed command to the torque command converting unit 61d. In other words, the second subtraction unit 61c compares a target angular speed specified by the angular speed command with the present rotational speed of the generator 15, and outputs difference therebetween to the torque command converting unit 61d as a speed differential signal.

The torque command converting unit 61d then uses the speed differential signal acquired from the second subtraction unit 61c to generate a torque command, and outputs the torque command to the voltage command generating unit 62 via a switcher 70.

As described above, by performing feedback control using the rotational position and the rotational speed of the generator 15 derived from the rotational position of the propeller 13 detected by the position detector 16, the torque command generating unit 61 can output a more accurate torque command.

Referring back to FIG. 8, the voltage command generating unit 62 will now be described. The voltage command generating unit 62 generates a voltage command for the generator 15 in accordance with the torque command thus received, and outputs the voltage command to the control signal generating unit 66. When acquiring a torque command from the torque command generating unit 61, for example, the voltage command generating unit 62 generates a voltage command based on the torque command, and outputs the voltage command to the control signal generating unit 66. In this case, as an exemplary method, the voltage command generating unit 62 acquires a generator current detection value detected by the generator current detector 19 in order to generate the voltage command, and extracts a torque current component contributing to torque generation from the generator current detection value. The voltage command generating unit 62 generates the voltage command based on the deviation between the torque current component thus extracted and the torque command acquired from the torque command generating unit 61.

The system voltage detecting unit 63 monitors a connecting point between the power converting unit 21 and the electric power system 30 to detect the voltage of the electric power system 30, and outputs an instantaneous value of the voltage thus detected to the voltage phase generating unit 65 and the control signal generating unit 66 as a system voltage detection value.

The voltage phase generating unit 65 generates information on voltage phases of the electric power system 30 from the voltage values of the three phases of the electric power system 30, and outputs the information to the control signal generating unit 66.

The control signal generating unit 66 generates a control signal of a PWM pulse pattern for causing the power converting unit 21 to perform power conversion, and outputs the control signal thus generated to the power converting unit 21. The control signal generating unit 66 generates a control signal based on the voltage command acquired from the voltage command generating unit 62, the system voltage detection value acquired from the system voltage detecting unit 63, and the information on the voltage phases acquired from the voltage phase generating unit 65.

Based on the control signal of the PWM pulse pattern output from the control signal generating unit 66, the power converting unit 21 turns ON/OFF the bidirectional switches SW1 to SW9 (refer to FIG. 9) to perform power conversion. By directly switching voltages to be input with the bidirectional switches SW1 to SW9, the power converting unit 21 performs control on the generator 15 and on the electric power system 30 individually. As a result, the power converting unit 21 can convert electric power generated by the generator 15 in accordance with the voltage value and the frequency of the electric power system 30, and can output the electric power.

As described above, the conversion controller 22 generates a torque command based on the rotational speed of the generator 15 derived from the rotational position of the propeller 13 detected by the position detector 16. The conversion controller 22 controls the power converting unit 21 in accordance with the torque command to control power generation performed by the generator 15. In other words, in the wind power generator 1 according to the first embodiment, the rotational position of the propeller 13 detected by the position detector 16 can also be used for the power generation control processing.

The conversion controller 22 further includes a position command unit 68, the position controller 69, and the switcher 70. The conversion controller 22 uses these processing units to perform the propeller position control processing.

The position command unit 68 stores a plurality of pieces of information of a position command that specifies the target position in an internal storage unit. The position command unit 68 reads a position command corresponding to the rotational position of the propeller 13 specified by the operating unit 23 from the internal storage unit, and outputs the position command to the position controller 69. The position command stored in the position command unit 68 is information indicating that the position of the hub 13a most suitable for attachment or removal of each blade 13b is the target position. Alternatively, by inputting the target position directly on the operating unit 23, the propeller 13 can be stopped at an arbitrary rotational position besides at the rotational position most suitable for attachment or removal of the blade 13b.

An assumption is made that the rotational position of the hub 13a at 0 degree is the position suitable for removal of the blade 13b1 and that the rotational position of the hub 13a at 120 degrees is the position suitable for removal of the blade 13b2, for example. Furthermore, an assumption is made that the rotational position of the hub 13a at 240 degrees is the position suitable for removal of the blade 13b3, for example.

In this case, the position command unit 68 stores position commands each indicating that the rotational position of the hub 13a at 0 degree, the rotational position of the hub 13a at 120 degree, or the rotational position of the hub 13a at 240 degrees is the target position in the internal storage unit. If the operating unit 23 specifies the blade 13b2, for example, the position command unit 68 reads the position command indicating that the rotational position of the hub 13a at 120 degree is the target position from the internal storage unit, and outputs the position command to the position controller 69.

The position command unit 68 may generate a position command corresponding to the rotational position of the hub 13a specified by the operating unit 23, and may output the position command to the position controller 69. Furthermore, the position command unit 68 may store position commands indicating that each rotational position of the hub 13a from equal to or larger than 0 degree to smaller than 360 degrees (e.g., rotational position at every 1 degree) is the target position in the internal storage unit, for example. In this case, if the operating unit 23 specifies the rotational position of the hub 13a, the position command unit 68 reads a position command indicating that the rotational position thus specified is the target position from the internal storage unit, and outputs the position command to the position controller 69.

Furthermore, if the operating unit 23 specifies the rotational position of the hub 13a, the position command unit 68 outputs a switching signal to the switcher 70. With the switching signal, the switcher 70 switches the torque commands to be input to the voltage command generating unit 62 from the torque command transmitted from the torque command generating unit 61 to the torque command transmitted from the position controller 69.

The position controller 69 acquires the position command output from the position command unit 68, the rotational position output from the integrated controller 40, and the rotational speed output from the speed arithmetic unit 67. The position controller 69 then outputs a torque command for causing the rotational position of the propeller 13 to coincide with the target position specified by the position command based on the position command, the rotational position, and the rotational speed.

Specifically, the position controller 69 subtracts a position detection value from the position command to generate a position differential signal. The position controller 69 then performs proportional-integral (PI) amplification on the position differential signal thus generated, thereby converting the position differential signal into a speed signal. Subsequently, the position controller 69 subtracts a speed detection value from the speed signal to generate a speed differential signal. The position controller 69 then performs PI amplification on the speed differential signal thus generated, thereby converting the speed differential signal into a torque command. The position controller 69 then outputs the torque command to the switcher 70.

The torque command output from the position controller 69 is received by the switcher 70, and is output to the voltage command generating unit 62 from the switcher 70. The voltage command generating unit 62 outputs a voltage command corresponding to the torque command received from the position controller 69 to the control signal generating unit 66. As a result, power conversion from the electric power system 30 to the generator 15 is performed, whereby the propeller 13 moves to the target position specified by the operating unit 23 and stops at the target position.

As described above, the power converting device 20 uses the position command unit 68 and the position controller 69 to perform the propeller position control processing. In other words, the conversion controller 22 controls the power converting unit 21 so as to control the rotational position of the propeller 13 by using the generator 15 as an electric motor, thereby locating the blade 13b at the attachment position or the removal position without using a crane nor a hydraulic system, for example. As a result, the propeller 13 is stopped to facilitate attachment and removal of the blade 13b, whereby it is possible to improve the workability of an installation operation and a maintenance operation for the wind power generating unit 10.

After the rotational position of the propeller 13 reaches the target position, the position controller 69 continues to cause the control signal generating unit 66 to output a control signal based on the rotational position of the propeller 13 and the target position to the power converting unit 21. This operation can keep the rotational position of the propeller 13 still at the target position after the rotational position of the propeller 13 reaches the target position.

As described above, in the first embodiment, the wind power generator 1 includes the propeller 13, the position detector 16, and the pitch controller 50. The propeller 13 includes the blades 13b whose pitch angle is changeable, and is rotated by the wind (an example of a fluid). The position detector 16 detects the rotational position of the propeller 13. The pitch controller 50 performs pitch control for changing the pitch angle depending on the position of each of the blades 13b specified by the rotational position of the propeller 13. Therefore, according to the first embodiment, it is possible to change the pitch angle of each of the blades 13b individually depending on the position of each of the blades 13b.

The rotational speed of the propeller 13 usually fluctuates slightly behind the fluctuation in the wind speed. If the wind speed increases, for example, the rotational speed of the propeller 13 increases slightly behind the fluctuation in the wind speed. To address this, the pitch controller 50 may predict a change in the rotational speed of the propeller 13 based on the wind speed detected by the wind detector 18, and may correct the pitch control processing based on the prediction result.

The pitch controller 50, for example, acquires a wind speed detection value from the wind detector 18 via the integrated controller 40. The pitch controller 50 includes the storage unit, which is not illustrated, and stores therein a wind speed detection value acquired just previously.

The pitch controller 50 then compares a wind speed detection value newly acquired with the wind speed detection value stored in the storage unit. If the wind speed detection value newly acquired is larger than the wind speed detection value stored in the storage unit, the pitch controller 50 determines that the rotational speed of the propeller 13 is going to increase. If it is determined that the rotational speed of the propeller 13 is going to increase, the pitch controller 50 makes the pitch angle of each of the blades 13b larger on the whole. This operation can prevent over-rotation of the propeller 13.

By contrast, if the wind speed detection value newly acquired is smaller than the wind speed detection value stored in the storage unit, the pitch controller 50 determines that the rotational speed of the propeller 13 is going to decrease. If it is determined that the rotational speed of the propeller 13 is going to decrease, the pitch controller 50 makes the pitch angle of each of the blades 13b smaller on the whole. This operation can prevent shortage in power generation due to underrotation of the propeller 13.

As described above, the pitch controller 50 may predict a change in the rotational speed of the propeller 13 based on the wind speed detected by the wind detector 18, and may correct the pitch control processing based on the prediction result.

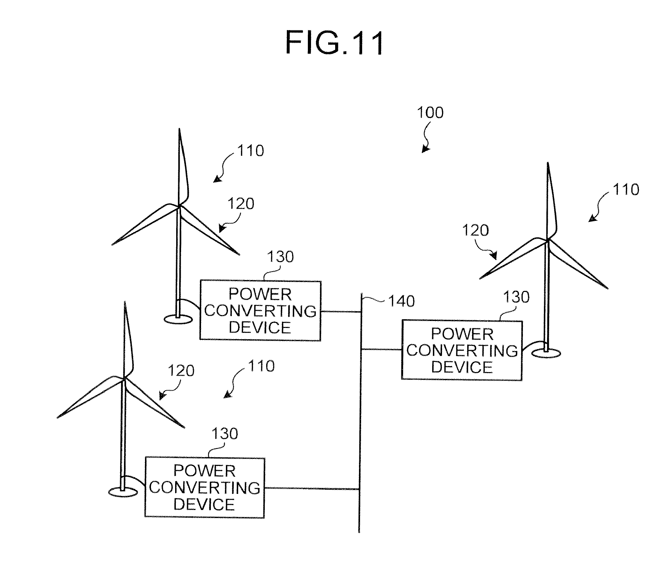

In the first embodiment, the explanation has been made of the wind power generator 1 including the wind power generating unit 10 and the power converting device 20. In a second embodiment, an explanation will be made of a wind farm in which a plurality of wind power generators are arranged. FIG. 11 is a schematic of a configuration of a wind farm according to the second embodiment. The wind farm according to the second embodiment is an example of the power generating system disclosed in the present application.

As illustrated in FIG. 11, a wind farm 100 according to the second embodiment includes a plurality of wind power generators 110, and each of the wind power generators 110 is connected to a power-transmission line 140. Each of the wind power generators 110 includes a wind power generating unit 120 and a power converting device 130.

The wind power generators 110 each have the same configuration as that of the wind power generator 1 according to the first embodiment. In other words, the wind power generating unit 120 has the same configuration as that of the wind power generating unit 10, and the power converting device 130 has the same configuration as that of the power converting device 20.

The voltage output by the power converting device 130 to the power-transmission line 140 conforms to the voltage of an electric power system. In other words, a matrix converter is used as a power converting unit in the power converting device 130, for example. Furthermore, a transformer having a transformation ratio in which the primary rated voltage is identical to the voltage of the electric power system is used as a transformer included in the matrix converter, for example. This configuration allows the power converting device 130 to be connected to the power-transmission line 140 directly.

Therefore, if a matrix converter is used as the power converting unit of the power converting device 130, no transformer needs to be provided separately. As a result, it is possible to achieve simplification and space-saving of the configuration.

By providing a plurality of taps to the primary winding of the transformer included in the matrix converter, selecting a tap conforming to the voltage of the electric power system, and connecting the tap to the power-transmission line 140, it is possible to connect the power converting device 130 to an electric power system having different voltage while achieving simplification and space-saving of the configuration.

Furthermore, because the rotational position of a windmill is controlled by operating a generator of the wind power generating unit 120 as an electric motor, attachment and removal of blades can be facilitated. As a result, it is possible to carry out the construction works of the entire wind farm 100 more efficiently and to shorten the construction time.

In the embodiments, the explanation has been made of the example in which the power generator disclosed in the present application is applied to the wind power generator. However, the power generator disclosed in the present application may be applied to a propeller-type power generator other than the wind power generator, such as a tidal power generator that generates power by rotating a propeller with an ocean current.

In the embodiments, the conversion controller 22 controls the power converting unit 21 so as to use the generator 15 as an electric motor and to control the rotational position of the propeller 13, thereby performing the propeller position control processing. The propeller position control processing, however, is not limited to the case where the generator 15 is used as an electric motor.

The conversion controller 22, for example, may control a braking device (not illustrated) provided to an output shaft of the generator 15 based on the rotational position of the propeller 13 detected by the position detector 16, thereby causing the rotational position of the propeller 13 to coincide with a position determined for each blade 13b as an attachment position or a removal position of the blade 13b.

In the embodiments, the explanation has been made of the example in which the pitch controller 50 is provided separately from the integrated controller 40. Alternatively, the pitch controller 50 may be configured integrally with the integrated controller 40.

## Claims

1. A power generator (1, 110) comprising:
a propeller (13) that comprises a plurality of blades (13b1, 13b2, 13b3) whose pitch angle is changeable and that is rotated by a fluid;
a position detector (16) that detects a rotational position of the propeller (13); and
a pitch controller (50) that performs pitch control processing for changing the pitch angle depending on a position of each of the blades (13b1, 13b2, 13b3) specified by the rotational position of the propeller (13).

2. The power generator (1, 110) according to claim 1, further comprising:
a position controller that performs position control processing for controlling the rotational position of the propeller (13) to locate a single blade (13b1, 13b2, 13b3) among the blades (13b1, 13b2, 13b3) at a predetermined attachment position or a predetermined removal position, wherein
when the position controller performs the position control processing, the pitch controller (50)changes the pitch angle of the single blade (13b1, 13b2, 13b3) to a pitch angle corresponding to the attachment position or the removal position.

3. The power generator (1, 110) according to claim 2, further comprising:
a rotational position acquiring unit that acquires the rotational position of the propeller (13) from the position detector (16), wherein
the rotational position acquiring unit outputs the rotational position of the propeller (13) acquired from the position detector (16) to both the pitch controller (50) and the position controller.

4. The power generator (1, 110) according to claim 2 or 3, further comprising:
a generator that performs power generation by rotation of the propeller (13); and
a power converting unit that converts electric power generated by the generator and supplies the converted electric power to an electric power system, wherein
the position controller controls the power converting unit so as to control the rotational position of the propeller (13) by using the generator as an electric motor to locate a single blade (13b1, 13b2, 13b3) among the blades (13b1, 13b2, 13b3) at the attachment position or the removal position.

5. The power generator (1, 110) according to claim 4, wherein the position controller performs the position control processing based on the rotational position of the propeller (13) detected by the position detector (16), and performs power generation control processing for controlling the power converting unit to control the power generation performed by the generator based on a rotational speed of the generator derived from the rotational position of the propeller (13) detected by the position detector (16).

6. The power generator (1, 110) according to claim 1, wherein the pitch controller (50) causes, by performing the pitch control processing, the blade (13b1, 13b2, 13b3) located at a lower position to have a larger area to catch the fluid.

7. The power generator (1, 110) according to claim 6, further comprising:
a fluid detector that detects a speed of the fluid around the propeller (13), wherein
the pitch controller (50) predicts a change in a rotational speed of the propeller (13) based on a fluid speed detected by the fluid detector, and corrects the pitch control processing based on a prediction result.

8. A power generating system (100) comprising:
a plurality of power generators (1, 110), wherein
each of the power generators (1, 110) comprises:
a propeller (13) that comprises a plurality of blades (13b1, 13b2, 13b3) whose pitch angle is changeable and that is rotated by a fluid;
a position detector (16) that detects a rotational position of the propeller (13); and
a pitch controller (50) that performs pitch control processing for changing the pitch angle depending on a position of each of the blades (13b1, 13b2, 13b3) specified by the rotational position of the propeller (13).
